# EUROPÄISCHE PATENTSCHRIFT

(11) **EP 1 033 276 B1**
(45) Veröffentlichungstag und Bekanntmachung des Hinweises auf die Patenterteilung: **17.03.2004**
(21) Anmeldenummer: 00100787.1
(22) Anmeldetag: 15.01.2000
(51) Int. Cl.: B60K 41/28

(54) **Verfahren und Vorrichtung zur automatisierten Beeinflussung des Fahrverhaltens eines Kraftfahrzeugs mit Brennkraftmaschine**
Method and apparatus for automated influencing of the handling characteristics of a vehicle with an internal combustion engine
Appareil et procédure pour influencer de façon automatisée le style de conduite d'un vehicule avec moteur à combustion interne

(30) Priorität: 02.03.1999 DE 19908907
(43) Veröffentlichungstag der Anmeldung: 06.09.2000
(73) Patentinhaber: DaimlerChrysler AG, 70567 Stuttgart (DE)
(72) Erfinder: Gimmler, Helmut, 71409 Schwaikheim (DE); Holdgrewe, Kai, 71409 Schwaikheim (DE); Kuhn, Klaus-Peter, Dr., 73655 Plüdershausen (DE); Onnen, Christian, 73730 Esslingen (DE)

(56) Entgegenhaltungen:
- DE-A- 3 709 388
- DE-A- 4 111 023
- US-A- 4 967 357
- US-A- 5 099 429
- US-A- 5 508 925

## Beschreibung

Die Erfindung betrifft ein Verfahren und eine Vorrichtung zur automatisierten Beeinflussung des Fahrverhaltens eines Kraftfahrzeugs mit Brennkraftmaschine. Solche Verfahren und Vorrichtungen sind aus dem Stand der Technik in vielerlei Modifikationen bekannt.

Aus der Druckschrift DE 35 23 352 C2 ist ein Verfahren zum Regeln der Fahrgeschwindigkeit eines Kraftfahrzeugs bekannt, bei dem die aktuelle Fahrzeuggeschwindigkeit erfaßt wird und bei einer Abweichung von einem Sollwert eine selbsttätige Beschleunigungssteuerung sowie eine Geschwindigkeitsregelung einsetzt, bei der eine Beziehung für den Drosselklappenwinkel in Abhängigkeit der Soll- und der Ist-Geschwindigkeit berücksichtigt wird. Dieses Verfahren entspricht in seinem Grundaufbau einer konventionellen Geschwindigkeitsregelung, für die in einer Regel- und Steuereinheit im Fahrzeug aus Meßsignalen gemäß einer gegebenen Berechnungsvorschrift Stellsignale zur Einstellung diverser Fahrzeugkomponenten erzeugt werden.

In der Druckschrift Elektronik 18/1995, S.44-46, 48, "Sanft beschleunigt" von Rode, Wolfgang und Schuitz, Raimund wird eine Methode zur Steuerung eines elektrischen Antriebsmotors eines Motorrollers unter Einsatz von Fuzzy-Logik beschrieben. Zur Vermeidung gefährlicher Fahrsituationen werden eine Reihe von Bedingungen formuliert, indem auf logische Variablen abgebildete Betriebs- und Zustandsgrößen untereinander verknüpft und gemäß einer fest abgelegten Prüflogik auf ihren Wahrheitsgehalt untersucht werden. Als Betriebs- und Zustandsgrößen werden die Fahrzeuggeschwindigkeit, die Position des Gasdrehgriffs, die Batteriespannung und die Stromstärke ermittelt und ihrem Wert entsprechend in vorgegebene Kategorien eingeteilt. Mit Hilfe zyklisch abzuprüfender logischer Bedingungen können eine Reihe von Gefahrensituationen wie zum Beispiel Aufbäumen des Fahrzeugs als Folge eines sehr hohen Anzugsmoments unterbunden werden.

Diese Methode ist jedoch auf den Einsatz von Elektromotoren beschränkt, sie ist nicht auf die Steuerung und Regelung von Fahrzeugkomponenten in Fahrzeugen mit Brennkraftmaschine anwendbar.

Aus der Druckschrift DE 41 11 023 A1 ist ein elektronisches System für ein Fahrzeug bekannt, mit dem das Zusammenwirken verschiedener in dem Fahrzeug angeordneter elektronischer Einzelsysteme koordiniert wird. In diesem Zusammenhang werden Informationen zur Ermittlung des Fahrerwunsches hinsichtlich einer gewünschten positiven und/oder negativen Beschleunigung erfasst. Bei den erfassten Informationen handelt es sich um die Stellung des Fahrpedals und/oder des Bremspedals. Ferner wird bei der Ermittlung des Fahrerwunsches ein Fahrgeschwindigkeitssignal berücksichtigt. Ausgehend von diesem Fahrerwunsch wird zwischen einem Bremsvorgang, einer Beschleunigung und einer gleichmäßigen Fahrt unterschieden. Die Ermittlung des Beginns oder der Beendigung eines der vorstehend aufgeführten Fahrzeugzustände ist nicht vorgesehen. Somit werden auch keine sich unterscheidenden Bedingungen zur Erkennung des Beginns oder der Beendigung eines solchen Fahrzeugzustandes benötigt. Bei dem in der Druckschrift DE 41 11 023 A1 beschriebenen Gegenstand reicht demnach die Information aus, dass einer der drei betrachteten Fahrzeugzustände vorliegt. Eine Information darüber, ob der Beginn oder die Beendigung eines solchen Fahrzeugzustandes vorliegt, wird nicht benötigt.

Der Erfindung liegt das Problem zugrunde, Fahrsituationen in Kraftfahrzeugen mit Brennkraftmaschine zu erkennen und in Abhängigkeit der festgestellten Fahrsituation das Fahrverhalten beeinflussende Maßnahmen zu ergreifen.

Dieses Problem wird erfindungsgemäß mit den Merkmalen des Anspruches 1 bzw. 15 gelöst.

Das erfindungsgemäße System zur automatisierten Beeinflussung des Fahrverhaltens eines verbrennungsmotorisch betriebenen Kraftfahrzeugs stellt anhand eines Regelwerks sowohl den Beginn als auch die Beendigung der drei Fahrzustände Konstantfahrt, Beschleunigung und Verzögerung fest. Hierfür werden bestimmte Betriebsgrößen und Zustandsgrößen in vorteilhaft aufeinanderfolgenden, hierarchisch gegliederten Schritten erfaßt bzw. bestimmt und in einer Regel- und Steuereinheit anhand des vorgegebenen Regelwerks verknüpft. Liegt der Beginn oder die Beendigung eines der Fahrzustände Konstantfahrt, Beschleunigung oder Verzögerung vor, so werden in der Regel- und Steuereinheit Stellsignale erzeugt und diese Stellsignale den entsprechenden Fahrzeug- oder Motorkomponenten zur automatischen Einstellung zugeführt.

Auf diese Weise ist es möglich, zu Beginn bzw. beim Ende einer Fahrsituation entsprechende Maßnahmen für eine verbesserte wirtschaftliche und/oder sicherheitsrelevante Fahrstrategie zu ergreifen. So ist es beispielsweise möglich, nach einem festgestellten Beginn eines Verzögerungsvorgangs, ausgelöst durch Betätigung der Fußbremse, weitere Bremsmaßnahmen wie die Aktivierung der Motorbremse zur Unterstützung des Bremsvorgangs vorzubereiten, einzuleiten oder durchzuführen.

Die im Regelwerk niedergelegten Bedingungen für die Konstantfahrt, Beschleunigung und Verzögerung werden für den Beginn und die Beendigung in unterschiedlicher Weise formuliert. Dies kann durch die Vorgabe unterschiedlicher Regeln für Beginn und Beendigung jeweils eines Fahrzustands erfolgen, insbesondere aber auch mittels Vorgabe unterschiedlich hoher Referenzwerte für ein und dieselbe Betriebs- oder Zustandsgröße festgelegt werden, welche der Beurteilung über Beginn bzw. Beendigung eines aktuellen Fahrzustands zugrunde gelegt wird. Auf diese Weise kann eine Art Hysteresefunktion für Beginn und Ende eines Fahrzustands realisiert werden, wobei die Hysteresefunktion die Entscheidung für Beginn und Ende insoweit positiv beeinflußt, daß Ungenauigkeiten oder schnelles Hin- und Herschalten zwischen zwei Schaltzuständen vermieden werden können. Zweckmäßig werden für den Beginn eines Fahrzeugzustands höhere Referenzwerte vorgegeben als für die Beendigung desselben Fahrzeugzustands, wodurch unerwünscht schnelle Schaltwechsel zwischen zwei Fahrzuständen vermieden werden. Es wird hierdurch eine Glättung der Funktionen für Beschleunigung, Konstantfahrt und Verzögerung erreicht.

Als Betriebs- und Zustandsgrößen werden zunächst mehrere der Größen Kupplung geschlossen (Kupplungsstatus), Fahrzeug hält an (Fahrzeug-Fahrstatus), Fahrzeugbremse wird genutzt (Bremsenstatus) und Retarder wird genutzt (Retarderstatus) ermittelt, entweder unmittelbar durch Messung oder mittelbar durch Verarbeitung gemessener Größen. Diese Größen werden zweckmäßig in einem vorgeschalteten Schritt, der Datenvorverarbeitung, festgestellt, bevor die nach festgelegten Regeln erfolgende Verknüpfung der Betriebs- und Zustandsgrößen durchgeführt wird.

Als weitere Größen für die Beurteilung des Fahrzeugzustandes werden mehrere der Größen die Fahrzeugbeschleunigung, Fahrzeuggeschwindigkeit, Gaspedalposition, Gaspedalgeschwindigkeit, Fahrbahnsteigung, Änderung der Fahrbahnsteigung und die Momentendifferenz sowie die Momentendifferenzänderung zwischen Fahrerwunschmoment und Ist-Antriebsmoment ermittelt.

Die gemessenen bzw. errechneten Betriebs- und Zustandsgrößen werden einzeln oder in Kombination in einem in der Regel- und Steuereinheit hinterlegten Regelwerk verarbeitet und der Entscheidung zugrunde gelegt, ob sich der Fahrzeugzustand im Beginn oder im Abschluß eines Beschleunigungsvorgangs, eines Verzögerungsvorgangs oder einer Konstantfahrt befindet.

Als Betriebs- und Zustandsgrößen können sowohl logische als auch numerische Größen verwendet werden. Bei den in der Datenvorverarbeitung ermittelten Größen handelt es sich vorteilhaft um logische Größen, bei den übrigen Betriebs- und Zustandsgrößen um numerische Größen. In dem Regelwerk erfolgt eine kombinierte Abfrage der logischen und der numerischen Größen.

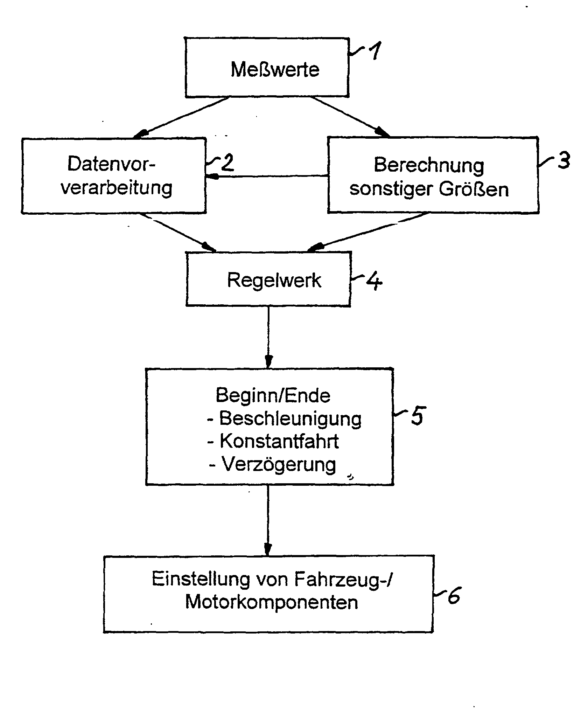

Weitere Vorteile und zweckmäßige Ausführungsformen sind den weiteren Ansprüchen, der Figurenbeschreibung und der Zeichnung zu entnehmen, in der schematisch der Ablauf eines automatisierten Verfahrens zur Fahrsituationserkennung und zur Beeinflussung des Fahrverhaltens eines Kraftfahrzeugs mit Brennkraftmaschine dargestellt ist.

Gemäß dem im Block 1 dargestellten ersten Verfahrensschritt werden zunächst sensorisch Meßwerte im Fahrzeug aufgenommen, die für die Durchführung der automatisierten Komponentenbeeinflussung zwingend erforderlich sind. Es werden insbesondere die Fahrzeuggeschwindigkeit, die Gaspedalposition, das Fahrerwunschmoment, im Falle eines Handschaltgetriebes der Kupplungsstatus, der aktuelle Gang, im Falle eines Retarders die Stellung des Retarderhebels sowie die Stellung des Bremslichtschalters festgestellt, wobei gegebenenfalls eine Zeitabhängigkeit berücksichtigt und auch mehrere der vorgenannten Größen in jeder möglichen Kombination bestimmt werden kann.

In einem nachfolgenden Verfahrensschritt, der im Block 2 dargestellten Datenvorverarbeitung, werden unter Verwendung aller oder eines Teils der im Block 1 ermittelten Meßwerte sowie sonstiger, in einem Block 3 ermittelter Größen, die Betriebs- und Zustandsgrößen
- Kupplung geschlossen
- Fahrzeug hält an
- Fahrzeug fährt an
- Fahrzeugbremse wird genutzt
- Retarder wird genutzt
bestimmt. Diese Größen der Datenvorverarbeitung werden als logische Variable in einer Regel- und Steuereinheit des Kraftfahrzeugs deklariert und nehmen entweder die Werte "WAHR" oder "FALSCH" ein. Sie berechnen sich teilweise unter Verwendung von aus den Meßgrößen abgeleiteten Betriebs- und Zustandsgrößen, die im parallelen Verfahrensschritt gemäß Block 3 ermittelt werden, im einzelnen wie folgt:

Der Wert der Betriebs- und Zustandsgröße "Kupplung geschlossen" wird auf "WAHR" gesetzt, wenn der Kupplungsstatus kleiner als ein gegebener Referenzwert ist.

Der Wert der Betriebs- und Zustandsgröße "Fahrzeug hält an" wird auf "WAHR" gesetzt, wenn die Gaspedalgeschwindigkeit, die im Block 3 ermittelt wird, negativ und die Fahrzeuggeschwindigkeit kleiner als ein gegebener Referenzwert ist.

Der Wert der Betriebs- und Zustandsgröße "Fahrzeug fährt an" wird auf "WAHR" gesetzt, wenn die Gaspedalgeschwindigkeit positiv und die Fahrzeuggeschwindigkeit kleiner als ein gegebener Referenzwert ist.

Der Wert der Betriebs- und Zustandsgröße "Retarder genutzt" wird auf "WAHR" gesetzt, wenn der Retarderhebel auf einem Wert größer als Null steht.

Der Wert der Betriebs- und Zustandsgröße "Bremsen genutzt" wird auf "WAHR" gesetzt, wenn der Bremslichtschalter angeschaltet ist oder der Retarderhebel auf einem Wert größer als Null steht.

Im parallelen Block 3 werden Betriebs- und Zustandsgrößen, die nicht unmittelbar meßbar sind bzw. nicht unmittelbar gemessen werden, aus den im Verfahrensschritt 1 ermittelten Meßgrößen errechnet. Teilweise werden Daten aus dem Block 3 in den Block 2 transferiert; gegebenenfalls läuft die Berechnung der Größen aus Block 3 zeitlich vor der Berechnung der Größen aus Block 2 ab.

Im Block 3 werden insbesondere die Größen Fahrzeugbeschleunigung, Gaspedalgeschwindigkeit, Fahrbahnsteigung, die Änderung der Fahrbahnsteigung, die Momentendifferenz und die Momentendifferenzänderung zwischen dem Fahrerwunschmoment und dem Ist-Antriebsmoment errechnet. Bei den zu ermittelnden Betriebs- und Zustandsgrößen handelt es sich wie auch bei den Meßgrößen aus dem Block 1 um numerische Variablen, die zweckmäßig ihrem gemessenen oder errechneten Wert entsprechend in vorgegebene Intervalle eingeteilt werden.

Im einzelnen wird
- die Fahrzeugbeschleunigung in zumindest eines der Intervalle Null, nicht Null, positiv, nicht positiv, negativ, nicht negativ,
- die Fahrzeuggeschwindigkeit in zumindest eines der Intervalle sehr groß, nicht sehr groß, nicht klein, nicht sehr klein,
- die Gaspedalposition in eines der Intervalle Null, klein, groß,
- bei Verwendung eines Automatgetriebes die Gaspedalposition in eines der Intervalle Kickdown, nicht Kickdown,
- die Gaspedalgeschwindigkeit in eines der Intervalle Null, negativ, positiv,
- die Fahrbahnsteigung in zumindest eines der Intervalle nicht sehr positiv, nicht sehr groß positiv,
- die Änderung der Fahrbahnsteigung in zumindest eines der Intervalle Null, nicht Null, negativ, nicht negativ, positiv, nicht positiv, sehr groß,
- die Momentendifferenz zwischen Fahrerwunschmoment und Ist-Antriebsmoment gegebenenfalls in das Intervall nicht klein,
- die Momentendifferenzänderung Fahrerwunschmoment - Ist-Antriebsmoment in zumindest eines der Intervalle groß, sehr groß
eingeteilt.

Die Intervallgrenzen für jede Betriebs- und Zustandsgröße können sowohl als feste, unveränderliche Größe vorgegeben als auch situativ in Abhängigkeit anderer, sich ändernder Größen adaptiert werden.

Im nächsten Verfahrensschritt, dem Block 4, wird unter Anwendung eines die logischen und die numerischen Variablen verarbeitenden Regelwerks der aktuelle Fahrzeugzustand ermittelt, der gemäß dem Block 5 in eine der Kategorien Beginn oder Ende eines Beschleunigungsvorgangs, einer Konstantfahrt oder eines Verzögerungsvorgangs eingeteilt wird. In Abhängigkeit des in Block 4 und 5 festgestellten aktuellen Fahrzeugzustands werden daraufhin wie in Block 6 dargestellten Stellsignale zur Einstellung diverser Fahrzeug- und/oder Motorkomponenten erzeugt, die im Hinblick auf Wirtschaftlichkeit und/oder Fahrsicherheit für ein optimiertes Fahrzeugverhalten sorgen. Es werden beispielsweise zu Beginn eines Vorgangs den aktuellen Vorgang unterstützende Maßnahmen und bei Beendigung eines Vorgangs den aktuellen Vorgang abschließende Maßnahmen getroffen. Diese Maßnahmen betreffen insbesondere auch das Verhalten der Brennkraftmaschine beeinflussende Motorkomponenten.

Um zu vermeiden, daß geringfügige Meßwertschwankungen oder Ungenauigkeiten bei der Berechnung zu einem schnellen Hin- und Herschalten zwischen zwei unterschiedlichen Fahrzeugzuständen führen, was einen ständigen, unerwünschten Wechsel in der Einstellung der Fahrzeug- und Motorkomponenten auslösen könnte, werden für den Beginn und für die Beendigung eines Fahrzeugzustandes unterschiedliche Bedingungen formuliert. Die unterschiedlichen Bedingungen können sich in Form unterschiedlicher Regeln für Beginn und Beendigung jeweils des gleichen Fahrzustandes ausdrücken. Darüberhinaus ist es aber auch möglich und zweckmäßig, für Beginn und Beendigung unterschiedlich hohe Referenzwerte für die Abfrage einzelner Betriebs- und Zustandsgrößen vorzugeben, wobei insbesondere für die Entscheidung, ob der Beginn eines Fahrzustandes vorliegt, höhere Referenzwerte für eine Betriebs- und Zustandsgröße vorgegeben werden als für die Entscheidung, ob ein Fahrzustand beendet wird.

Für die Entscheidung, ob aktuell der Beginn eines Beschleunigungsvorgangs vorliegt, werden mehrere der Betriebs- und Zustandsgrößen Fahrzeuggeschwindigkeit, Fahrzeugbeschleunigung, Gaspedalposition, Gaspedalgeschwindigkeit, Fahrbahnsteigung sowie "Fahrzeug fährt an" im Regelwerk des Blocks 4 berücksichtigt. Der Beginn eines Beschleunigungsvorgangs liegt vor, falls zumindest eine der folgenden Bedingungen erfüllt ist:
- Fahrzeug fährt an = "WAHR",
- Fahrzeugbeschleunigung = positiv
   UND
   Fahrzeuggeschwindigkeit = nicht sehr groß
   UND
   Gaspedalposition = groß,
   wobei optional zu diesem Kriterium die Zusatzbedingung
   - Gaspedalgeschwindigkeit = positiv
      UND/ODER
   - Fahrbahnsteigung = nicht sehr groß positiv zusätzlich abgeprüft werden kann,
- Gaspedalposition = groß
   UND
   Gaspedalgeschwindigkeit = positiv
   UND
   Änderung der Fahrbahnsteigung = positiv.

Für die Entscheidung, ob der Beginn einer Konstantfahrt vorliegt, werden mehrere der Betriebs- und Zustandsgrößen Fahrzeuggeschwindigkeit, Fahrzeugbeschleunigung, Gaspedalgeschwindigkeit und Gaspedalgeschwindigkeit sowie "Kupplung geschlossen" berücksichtigt. Der Beginn einer Konstantfahrt liegt vor, falls zumindest eine der folgenden Bedingungen erfüllt ist:
- Kupplung geschlossen = "WAHR"
   UND
   Fahrzeuggeschwindigkeit = sehr groß,
   wobei optional zu diesem Kriterium die Zusatzbedingung
   - Gaspedalgeschwindigkeit = nicht negativ zusätzlich abgeprüft werden kann,
- Kupplung geschlossen = "WAHR"
   UND
   Fahrzeugbeschleunigung = Null
   UND
   Gaspedalgeschwindigkeit = Null,
   wobei optional zu diesem Kriterium die Zusatzbedingung
   - Gaspedalposition = nicht Kickdown zusätzlich abgeprüft werden kann

Für die Entscheidung, ob die Beendigung eines Beschleunigungsvorgangs vorliegt, werden mehrere der Betriebs- und Zustandsgrößen Gaspedalposition, Gaspedalgeschwindigkeit, "Kupplung geschlossen", "Fahrzeug hält an", "Bremse genutzt", "Retarder genutzt" und der Fahrzeugzustand "Beginn Konstantfahrt" berücksichtigt. Die Beendigung des Beschleunigungsvorgangs liegt vor, falls zumindest eine der folgenden Bedingungen erfüllt ist:
- Fahrzeug hält an = "WAHR",
- Kupplung geschlossen = "WAHR"
   UND
   Gaspedalposition = Null,
- Kupplung geschlossen = "WAHR"
   UND
   Fahrzeugbeschleunigung = nicht positiv
   UND
   Gaspedalposition = klein
   UND
   Gaspedalgeschwindigkeit = negativ,
- Kupplung geschlossen = "WAHR"
   UND
   Gaspedalposition = nicht positiv,
- Kupplung geschlossen = WAHR"
   UND
   Gaspedalgeschwindigkeit = negativ,
- Kupplung geschlossen = "WAHR"
   UND
   Fahrzeugbremse genutzt = "WAHR",
- Kupplung geschlossen = "WAHR"
   UND
   Retarder genutzt = "WAHR",
- Beginn Konstantfahrt = "WAHR".

Für die Entscheidung, ob der Beginn eines Verzögerungsvorgangs vorliegt, werden mehrere der Betriebs- und Zustandsgrößen Fahrzeuggeschwindigkeit, Fahrzeugbeschleunigung, Fahrbahnsteigung, Gaspedalposition "Kupplung geschlossen" und "Bremsen genutzt" berücksichtigt. Der Beginn eines Verzögerungsvorgangs liegt vor, falls zumindest eine der folgenden Bedingungen erfüllt ist:
- Fahrzeuggeschwindigkeit = nicht sehr klein
   UND
   Fahrzeugbeschleunigung = negativ,
   wobei zumindest eine der Zusatzbedingungen
   - Kupplung geschlossen = "WAHR" oder
   - Fahrbahnsteigung = nicht sehr positiv
      und außerdem zumindest eine der Zusatzbedingungen
   - Bremsen genutzt = "WAHR",
   - Gaspedalposition = Null,
      zusätzlich erfüllt sein muß.

Für die Entscheidung, ob die Beendigung einer Konstantfahrt vorliegt, werden mehrere der Betriebs- und Zustandsgrößen Fahrzeugbeschleunigung "Kupplung geschlossen", "Fahrzeug hält an", sowie der Fahrzeugzustand "Beginn Beschleunigung" und der Fahrzeugzustand "Beginn Verzögerung" berücksichtigt. Die Beendigung einer Konstantfahrt liegt vor, falls zumindest eine der folgenden Bedingungen erfüllt ist:
- Fahrzeugbeschleunigung = nicht Null
   UND
   Kupplung geschlossen = "WAHR",
- Gaspedalgeschwindigkeit = nicht Null
   UND
   Kupplung geschlossen = "WAHR",
   wobei optional zu diesem Kriterium die Zusatzbedingung
   - Steigungsänderung = Null zusätzlich abgeprüft werden kann,
- Steigungsänderung = sehr groß
   UND
   Kupplung geschlossen = "WAHR",
- Fahrpedalposition = Kickdown
   UND
   Kupplung geschlossen = "WAHR",
   wobei optional zu diesem Kriterium die Zusatzbedingung
   - Momentendifferenz = nicht klein abgeprüft werden kann,
- Momentendifferenzänderung = sehr groß
   UND
   Kupplung geschlossen = "WAHR",
- Fahrzeug hält an = "WAHR",
- Beschleunigung beginnt = "WAHR",
- Verzögerung beginnt = "WAHR".

Für die Entscheidung, ob die Beendigung eines Verzögerungsvorgangs vorliegt, werden mehrere der Betriebs- und Zustandsgrößen Fahrzeugbeschleunigung, "Kupplung geschlossen", "Fahrzeug hält an", "Fahrzeugbremse genutzt", "Retarder genutzt", sowie der Fahrzeugzustand "Beginn Beschleunigung" und der Fahrzeugzustand "Beginn Konstantfahrt" berücksichtigt. Die Beendigung eines Verzögerungsvorgangs liegt vor, falls zumindest eine der folgenden Bedingungen erfüllt ist:
- Fahrzeugbeschleunigung = nicht negativ,
   wobei optional zu diesem Kriterium die Zusatzbedingung
   - Kupplung geschlossen = "WAHR" zusätzlich abgeprüft werden kann,

- Fahrzeug hält an = "WAHR",
- Beschleunigung beginnt = "WAHR",
- Konstantfahrt beginnt = "WAHR",
- Fahrzeugbremse genutzt = "FALSCH",
   wobei optional zu diesem Kriterium die Zusatzbedingung
   - Retarder genutzt = "FALSCH" zusätzlich abgeprüft werden kann.

Die in den Blöcken 2 bis 6 dargestellten Verfahrensschritte werden in einer Regel- und Steuereinheit des Kraftfahrzeugs durchgeführt, die mit Stellgliedern diverser Motor- und Fahrzeugkomponenten kommuniziert.

Der vorstehend verwendete Begriff "Kupplung" soll sowohl für mechanische Reibungskupplungen als auch für Überbrückungskupplungen in Drehmomentwandlern, die in automatischen Getrieben eingesetzt werden, verstanden werden.

## Patentansprüche

1. Verfahren zur automatisierten Beeinflussung des Fahrverhaltens eines Kraftfahrzeugs mit Brennkraftmaschine, bei dem Betriebs- und Zustandsgrößen ermittelt und mit Referenzwerten verglichen werden, wobei bei einer Abweichung der Betriebs- und Zustandsgrößen von den Referenzwerten Stellsignale zur Einstellung von Fahrzeug- und Motorkomponenten erzeugt werden,
- wobei als Betriebs- und Zustandsgrößen mehrere der Größen
• Kupplung geschlossen
• Fahrzeug hält an
• Fahrzeug fährt an
• Fahrzeugbremse wird genutzt
• Retarder wird genutzt
• Fahrzeugbeschleunigung
• Fahrzeuggeschwindigkeit
• Gaspedalposition
• Gaspedalgeschwindigkeit
• Fahrbahnsteigung
• Änderung der Fahrbahnsteigung
• Momentendifferenz Fahrerwunschmoment - Ist-Antriebsmoment
• Momentendifferenzänderung Fahrerwunschmoment - Ist-Antriebsmoment
festgestellt werden,
- wobei durch Verknüpfung der festgestellen Betriebs- und Zustandsgrößen der Beginn und die Beendigung der aktuellen Fahrzeugzustände Beschleunigungsvorgang, Verzögerungsvorgang und Konstantfahrt ermittelt werden, wobei die Bedingungen für den Beginn eines Fahrzeugzustands sich von den Bedingungen für die Beendigung desselben Fahrzeugzustands unterscheiden,
- und wobei bei Vorliegen einer der Bedingungen für Beginn oder Beendigung eines Beschleunigungsvorgangs, eines Verzögerungsvorgangs oder einer Konstantfahrt Stellsignale zur automatischen Einstellung von Fahrzeug- und Motorkomponenten erzeugt werden.

2. Verfahren nach Anspruch 1,
**dadurch gekennzeichnet,**
**daß** für die Beurteilung für den Beginn eines Fahrzeugzustandes höhere Referenzwerte vorgegeben werden als für die Beendigung desselben Fahrzeugzustandes.

3. Verfahren nach Anspruch 1 oder 2,
**dadurch gekennzeichnet,**
**daß** in einer der Verknüpfung der Betriebs- und Zustandsgrößen vorgeschalteten Datenvorverarbeitung mehrere der Größen Kupplung geschlossen, Fahrzeug hält an, Fahrzeug fährt an, Fahrzeugbremse wird genutzt und Retarder wird genutzt ermittelt werden.

4. Verfahren nach einem der Ansprüche 1 bis 3,
**dadurch gekennzeichnet,**
**daß** die Betriebs- und Zustandsgrößen dem Wert nach ermittelt und in Intervalle eingeteilt werden.

5. Verfahren nach einem der Ansprüche 1 bis 4,
**dadurch gekennzeichnet,**
**daß** die Betriebs- und Zustandsgrößen logische Größen sind.

6. Verfahren nach Anspruch 5,
**dadurch gekennzeichnet,**
**daß** Größen Kupplung geschlossen, Fahrzeug hält an, Fahrzeug fährt an, Fahrzeugbremse wird genutzt und Retarder wird genutzt logische Größen sind.

7. Verfahren nach einem der Ansprüche 1 bis 4,
**dadurch gekennzeichnet,**
**daß** die Betriebs- und Zustandsgrößen numerische Größen sind.

8. Verfahren nach Anspruch 7,
**dadurch gekennzeichnet,**
**daß** Größen Fahrzeugbeschleunigung, Fahrzeuggeschwindigkeit, Gaspedalposition, Gaspedalgeschwindigkeit, Fahrbahnsteigung, Änderung der Fahrbahnsteigung, Momentendifferenz und Momentendifferenzänderung numerische Größen sind.

9. Verfahren nach einem der Ansprüche 1 bis 8,
**dadurch gekennzeichnet,**
**daß** für die Entscheidung über den Beginn eines Beschleunigungsvorgangs mehrere der Betriebs- und Zustandsgrößen Fahrzeuggeschwindigkeit, Fahrzeugbeschleunigung, Gaspedalposition, Gaspedalgeschwindigkeit, Fahrbahnsteigung sowie "Fahrzeug fährt an" berücksichtigt werden.

10. Verfahren nach einem der Ansprüche 1 bis 9,
**dadurch gekennzeichnet,**
**daß** für die Entscheidung über den Beginn der Konstantfahrt mehrere der Betriebs- und Zustandsgrößen Fahrzeuggeschwindigkeit, Fahrzeugbeschleunigung, Gaspedalgeschwindigkeit und Gaspedalgeschwindigkeit sowie "Kupplung geschlossen" berücksichtigt werden.

11. Verfahren nach einem der Ansprüche 1 bis 10,
**dadurch gekennzeichnet,**
**daß** für die Entscheidung über die Beendigung des Beschleunigungsvorgangs mehrere der Betriebs- und Zustandsgrößen Gaspedalposition, Gaspedalgeschwindigkeit, "Kupplung geschlossen", "Fahrzeug hält an", "Bremse genutzt", "Retarder genutzt" und der Fahrzeugzustand "Beginn Konstantfahrt" berücksichtigt werden.

12. Verfahren nach einem der Ansprüche 1 bis 11,
**dadurch gekennzeichnet,**
**daß** für die Entscheidung über den Beginn des Verzögerungsvorgangs mehrere der Betriebs- und Zustandsgrößen Fahrzeuggeschwindigkeit, Fahrzeugbeschleunigung, Fahrbahnsteigung, Gaspedalposition "Kupplung geschlossen" und "Bremsen genutzt" berücksichtigt werden.

13. Verfahren nach einem der Ansprüche 1 bis 12,
**dadurch gekennzeichnet,**
**daß** für die Entscheidung über die Beendigung der Konstantfahrt mehrere der Betriebs- und Zustandsgrößen Fahrzeugbeschleunigung, "Kupplung geschlossen", "Fahrzeug hält an", sowie der Fahrzeugzustand "Beginn Beschleunigung" und der Fahrzeugzustand "Beginn Verzögerung" berücksichtigt werden.

14. Verfahren nach einem der Ansprüche 1 bis 13,
**dadurch gekennzeichnet,**
**daß** für die Entscheidung über die Beendigung der Verzögerung mehrere der Betriebs- und Zustandsgrößen Fahrzeugbeschleunigung, "Kupplung geschlossen", "Fahrzeug hält an", "Fahrzeugbremse genutzt", "Retarder genutzt", sowie der Fahrzeugzustand "Beginn Beschleunigung" und der Fahrzeugzustand "Beginn Konstantfahrt" berücksichtigt werden.

15. Vorrichtung zur automatisierten Beeinflussung des Fahrverhaltens eines Kraftfahrzeugs mit Brennkraftmaschine, wobei die Vorrichtung eine Regel- und Steuereinheit aufweist, der Betriebs- und Zustandsgrößen repräsentierende Eingangssignale zugeführt werden, wobei bei einer Abweichung der Betriebs- und Zustandsgrößen von gegebenen Referenzwerten Stellsignale zur Einstellung von Fahrzeug- und Motorkomponenten erzeugt und diese Stellsignale den Fahrzeug - und Motor komponenten zugeordneten Stellglieden zur Einstellung zugeführt werden,
- wobei als Betriebs- und Zustandsgrößen mehrere der Größen
• Kupplung geschlossen
• Fahrzeug hält an
• Fahrzeug fährt an
• Fahrzeugbremse wird genutzt
• Retarder wird genutzt
• Fahrzeugbeschleunigung
• Fahrzeuggeschwindigkeit
• Gaspedalposition
• Gaspedalgeschwindigkeit
• Fahrbahnsteigung
• Änderung der Fahrbahnsteigung
• Momentendifferenz Fahrerwunschmoment - Ist-Antriebsmoment
• Momentendifferenzänderung Fahrerwunschmoment - Ist-Antriebsmoment
festgestellt werden,
- wobei durch Verknüpfung der festgestellten Betriebs- und Zustandsgrößen der Beginn und die Beendigung der aktuellen Fahrzeugzustände Beschleunigungsvorgang, Verzögerungsvorgang und Konstantfahrt anhand eines in der Regel - und Stener einheit hinterlegten Regelwerks ermittelt werden, wobei die Bedingungen für den Beginn eines Fahrzeugzustands sich von den Bedingungen für die Beendigung desselben Fahrzeugzustands unterscheiden,
- und wobei bei Vorliegen einer der Bedingungen für Beginn oder Beendigung eines Beschleunigungsvorgangs, eines Verzögerungsvorgangs oder einer Konstantfahrt Stellsignale zur automatischen Einstellung von Fahrzeug- und Motorkomponenten erzeugt und diese Stellsignale den Fahrzeug - und Motor komponenten zugeordneten Stellglieden zur Einstellung zugeführt werden.

## Claims

1. A process for the automated influencing of the driving behaviour of a motor vehicle having an internal combustion engine in which operating and state variables are determined and compared with reference values, positioning signals for the adjustment of vehicle and engine components being generated in the event of any variation of the operating and state variables from the reference values,
- several of the following variables being determined as operating and state variables:
• clutch engaged
• vehicle stops
• vehicle moves off
• vehicle brake in use
• retarder in use
• vehicle acceleration
• vehicle speed
• accelerator pedal position
• accelerator pedal speed
• road gradient
• change in road gradient
• difference in torque between driver's desired torque and actual drive torque
• change in difference in torque between driver's desired torque and actual drive torque,
- the start and the end of the actual vehicle states for the acceleration process, the deceleration process and driving at constant speed being determined by linking the identified operating and state variables, the conditions for the start of a vehicle state differing from the conditions for the end of the same vehicle state,
- and positioning signals being generated for the automatic adjustment of vehicle and engine components where one of the conditions for the start or end of the acceleration process, the deceleration process or driving at constant speed is present.

2. A process in accordance with claim 1,
**characterised in that**
higher reference values are specified for the assessment of the start of a vehicle state than for the end of the same vehicle state.

3. A process in accordance with claim I or 2,
**characterised in that**
several of the following variables are determined in a preliminary data processing stage before the linking of the operating and state variables: clutch engaged, vehicle stops, vehicle moves off, vehicle brake in use and retarder in use.

4. A process in accordance with one of claims 1 to 3,
**characterised in that**
the operating and state variables are determined according to value and divided into intervals.

5. A process in accordance with one of claims 1 to 4,
**characterised in that**
the operating and state variables are logical values.

6. A process in accordance with claim 5,
**characterised in that**
the following variables are logical values: vehicle stops, vehicle moves off, vehicle brake in use and retarder in use.

7. A process in accordance with one of claims 1 to 4,
**characterised in that**
the operating and state variables are numerical values.

8. A process in accordance with claim 7,
**characterised in that**
the following values are numerical values: vehicle acceleration, vehicle speed, accelerator pedal position, accelerator pedal speed, road gradient, change in road gradient, difference in torque and change in difference in torque.

9. A process in accordance with one of claims 1 to 8,
**characterised in that**
several of the following operating and state variables are taken into account in deciding the start of an acceleration process: vehicle speed, vehicle acceleration, accelerator pedal position, accelerator pedal speed, road gradient and "vehicle moves off".

10. A process in accordance with one of claims 1 to 9,
**characterised in that**
several of the following operating and state variables are taken into account in deciding the start of driving at constant speed: vehicle speed, vehicle acceleration, accelerator pedal position, accelerator pedal speed, road gradient and "clutch engaged".

11. A process in accordance with one of claims 1 to 10,
**characterised in that**
several of the following operating and state variables are taken into account in deciding the end of the acceleration process: accelerator pedal position, accelerator pedal speed, "clutch engaged", "vehicle stops", "brakes in use", "retarder in use" and the driving state "start of driving at constant speed".

12. A process in accordance with one of claims 1 to 11,
**characterised in that**
several of the following operating and state variables are taken into account in deciding the start of the deceleration process: vehicle speed, vehicle acceleration, road gradient, accelerator pedal position, "clutch engaged" and "brakes in use".

13. A process in accordance with one of claims 1 to 12,
**characterised in that**
several of the following operating and state variables are taken into account in deciding the end of driving at constant speed: vehicle acceleration, "clutch engaged", "vehicle stops" and the driving states "start of acceleration" and "start of deceleration".

14. A process in accordance with one of claims I to 13,
**characterised in that**
several of the following operating and state variables are taken into account in deciding the end of the deceleration process: vehicle acceleration, "clutch engaged", "vehicle stops", "vehicle brake in use", "retarder in use" and the driving states "start of acceleration" and "start of deceleration".

15. A device for the automated influencing of the driving behaviour of a motor vehicle having an internal combustion engine, the device having an automatic control unit to which are fed input signals representing operating and state variables, positioning signals for the adjustment of vehicle and engine components being generated in the event of any variation of the operating and state variables from the reference values and these positioning signals being fed to actuators assigned to the vehicle and engine components to adjust them,
- several of the following variables being determined as operating and state variables:
• clutch engaged
• vehicle stops
• vehicle moves off
• vehicle brake in use
• retarder in use
• vehicle acceleration
• vehicle speed
• accelerator pedal position
• accelerator pedal speed
• road gradient
• change in road gradient
• difference in torque between driver's desired torque and actual drive torque
• change in difference in torque between driver's desired torque and actual drive torque,
- the start and the end of the actual vehicle states for the acceleration process, the deceleration process and driving at constant speed being determined using a set of rules stored in the automatic control device by linking the identified operating and state variables, the conditions for the start of a vehicle state differing from the conditions for the end of the same vehicle state,
- and positioning signals being generated for the automatic adjustment of vehicle and engine components and these positioning signals being fed to actuators assigned to the vehicle and engine components to adjust them where one of the conditions for the start or end of the acceleration process, the deceleration process or driving at constant speed is present.

## Revendications

1. Procédé pour influencer de façon automatisée le style de conduite d'un véhicule automobile avec un moteur à combustion interne, dans lequel des grandeurs de service et d'état sont calculées et comparées avec des valeurs de référence, des signaux de commande étant générés pour le réglage de composants de véhicule et de moteur dans le cas d'un écart des grandeurs de service et d'état par rapport aux valeurs de référence,
- plusieurs des grandeurs suivantes étant établies comme grandeurs de service et d'état
• embrayage fermé
• le véhicule s'arrête
• le véhicule démarre
• le frein du véhicule est utilisé
• le ralentisseur est utilisé
• accélération du véhicule
• vitesse du véhicule
• position de l'accélérateur
• vitesse de l'accélérateur
• pente de la chaussée
• variation de la pente de chaussée
• différence de couple couple souhaité du conducteur
- couple d'entraînement réel
• variation de la différence de couple couple souhaité du conducteur - couple d'entraînement réel
- le début et la fin des états actuels du véhicule opération d'accélération, opération de décélération et vitesse constante étant déterminés par l'association des grandeurs établies de service et d'état, les conditions pour le début d'un état du véhicule se différenciant des conditions pour la fin du même état du véhicule,
- et des signaux de commande pour le réglage automatique de composants du véhicule et du moteur étant générés en cas de présence de l'une des conditions pour le début ou la fin d'une opération d'accélération, une opération de décélération ou d'une vitesse constante.

2. Procédé selon la revendication 1,
**caractérisé en ce que**
pour l'évaluation pour le début d'un état du véhicule, on prédéfinit des valeurs de référence plus élevées que pour la fin du même état.

3. Procédé selon la revendication 1 ou 2,
**caractérisé en ce que**
plusieurs des grandeurs embrayage fermé, le véhicule s'arrête, le véhicule démarre, le frein de véhicule est utilisé et le ralentisseur est utilisé sont déterminées dans un pré-traitement de données disposé en amont de l'association des grandeurs de service et d'état.

4. Procédé selon l'une quelconque des revendications 1 à 3,
**caractérisé en ce que**
les grandeurs de service et d'état sont déterminées selon la valeur et divisées en intervalles.

5. Procédé selon l'une quelconque des revendications 1 à 4,
**caractérisé en ce que**
les grandeurs de service et d'état sont de grandeurs logiques.

6. Procédé selon la revendication 5,
**caractérisé en ce que**
des grandeurs embrayage fermé, le véhicule s'arrête, le véhicule démarre, le frein du véhicule est utilisé et le ralentisseur est utilisé sont des grandeurs logiques.

7. Procédé selon l'une quelconque des revendications 1 à 4,
**caractérisé en ce que**
les grandeurs de service et d'état sont des grandeurs numériques.

8. Procédé selon la revendication 7,
**caractérisé en ce que**
les grandeurs accélération du véhicule, vitesse du véhicule, position de l'accélérateur, vitesse de l'accélérateur, pente de chaussée, variation de la pente de chaussée, différence de couple et variation de la différence de couple sont des grandeurs numériques.

9. Procédé selon l'une quelconque des revendications 1 à 8,
**caractérisé en ce que**
pour la décision concernant le début d'une opération d'accélération, on tient compte de plusieurs des grandeurs de service et d'état vitesse du véhicule, accélération du véhicule, position de l'accélérateur, vitesse d'accélérateur, pente de chaussée et "le véhicule démarre".

10. Procédé selon l'une quelconque des revendications 1 à 9,
**caractérisé en ce que**
pour la décision concernant le début de vitesse constante, plusieurs des grandeurs de service et d'état vitesse du véhicule, accélération du véhicule, vitesse de l'accélérateur et "embrayage fermé" sont prises en compte.

11. Procédé selon l'une quelconque des revendications 1 à 10,
**caractérisé en ce que**
pour la décision concernant la fin de l'opération d'accélération, plusieurs des grandeurs de service et d'état position d'accélérateur, vitesse d'accélérateur, "embrayage fermé", "véhicule s'arrête", "frein utilisé", "ralentisseur utilisé" et l'état du véhicule "début vitesse constante" sont prises en compte.

12. Procédé selon l'une quelconque des revendications 1 à 11,
**caractérisé en ce que**
pour la décision concernant le début de l'opération de décélération, plusieurs des grandeurs de service et d'état vitesse du véhicule, accélération du véhicule, pente de chaussée, position de l'accélérateur "embrayage fermé" et "freins utilisés" sont prises en compte.

13. Procédé selon l'une quelconque des revendications 1 à 12,
**caractérisé en ce que**
pour la décision concernant la fin de la vitesse constante, plusieurs des grandeurs de service et d'état accélération du véhicule, "embrayage fermé", "véhicule s'arrête" et "début accélération" et l'état du véhicule "début décélération" sont pris en compte.

14. Procédé selon l'une quelconque des revendications 1 à 13,
**caractérisé en ce que**
pour la décision concernant la fin de la décélération, plusieurs des grandeurs de service et d'état accélération du véhicule, "embrayage fermé", "vitesse s'arrête", "frein du véhicule utilisé", "ralentisseur utilisé" et "début accélération" et l'état du véhicule "début vitesse constante" sont utilisés.

15. Dispositif pour influencer de façon automatisée le style de conduite d'un véhicule avec un moteur à combustion interne, le dispositif présentant une unité de réglage et de commande à laquelle sont amenés des signaux d'entrée représentant des grandeurs de service et d'état, des signaux de commande pour le réglage de composants du véhicule et du moteur étant générés lors d'un écart entre les grandeurs de service et d'état par rapport aux valeurs de référence données et ces signaux de commande étant amenés aux actionneurs attribués aux composants du véhicule et du moteur, plusieurs des grandeurs suivantes étant établies comme grandeurs de service et d'état
• embrayage fermé
• le véhicule s'arrête
• le véhicule démarre
• frein du véhicule est utilisé
• ralentisseur est utilisé
• accélération du véhicule
• vitesse du véhicule
• position de l'accélérateur
• vitesse d'accélérateur
• pente de chaussée
• variation de la pente de chaussée
• différence de couple couple souhaité du conducteur
- couple d'entraînement réel
• variation de la différence de couple couple souhaité du conducteur - couple d'entraînement réel
- le début et la fin des états actuels du véhicule opération d'accélération, opération de décélération et vitesse constante étant déterminés à l'aide d'un régulateur déposé dans l'unité de réglage et de commande par association des grandeurs de service et d'état établies, les conditions pour le début d'un état de véhicule se différenciant des conditions pour la fin du même état de véhicule,
- et des signaux de commande pour le réglage automatique des composants du véhicule et du moteur étant générés en cas de présence de l'une des conditions pour le début ou la fin d'une opération d'accélération, d'une opération de décélération ou d'une vitesse constante et ces signaux de commande étant amenés à des actionneurs attribués aux composants du véhicule et du moteur pour le réglage.
